# EUROPEAN PATENT SPECIFICATION

(11) **EP 4 478 512 B1**
(45) Date of publication and mention of the grant of the patent: **26.08.2026**
(21) Application number: 23880282.1
(22) Date of filing: 20.10.2023
(51) Int. Cl.: H01M 50/30, H01M 50/342, H01M 50/375, H01M 50/24, H01M 50/289

(54) **BATTERY PACK**
BATTERIEPACK
BLOC-BATTERIE

(30) Priority: 21.10.2022 KR 20220136062
(43) Date of publication of application: 18.12.2024
(73) Proprietor: LG Energy Solution, Ltd., Seoul 07335 (KR)
(72) Inventor: SHIN, Ju Hwan, Daejeon 34122 (KR); LEE, Hyoung Suk, Daejeon 34122 (KR); LEE, Jae Hyun, Daejeon 34122 (KR); JANG, Byung Do, Daejeon 34122 (KR)
(74) Representative: Plasseraud IP
(86) International application number: PCT/KR2023/016330
(87) International publication number: WO 2024/085707

(56) References cited:
- EP-A1- 4 391 184
- CN-A- 110 828 747
- CN-U- 211 320 177
- CN-U- 213 124 586
- CN-U- 215 816 017
- KR-A- 20220 098 588
- KR-A- 20220 098 588
- US-A1- 2014 113 167
- US-A1- 2020 194 756

## Description

### [Technical Field]

The present invention relates to a battery pack, characterized in that when a flame with high temperature gases occurs in any one of a plurality of battery modules accommodated therein, a screen cover is applied which is capable of extinguishing the flame so that the flame is not directly exposed to the outside.

### [Background Art]

One of the most important problems with lithium secondary batteries is securing the safety, as there is a risk of explosion and fire, etc. due to heat generation. The internal temperature of the secondary battery increases rapidly due to heat generation, and the rapid increase in temperature can cause thermal runaway phenomenon, which can lead to an explosion of the secondary battery, and can also spread to adjacent secondary batteries, causing great damage to the battery pack.

In order to eliminate such risks, control means are provided to monitor and control the voltage, current, etc. of a battery pack, or means are provided to extinguish a fire from the outside when a fire occurs in a battery pack, but there is a problem that such means alone cannot provide an initial rapid and active response to a fire occurring in a battery pack.

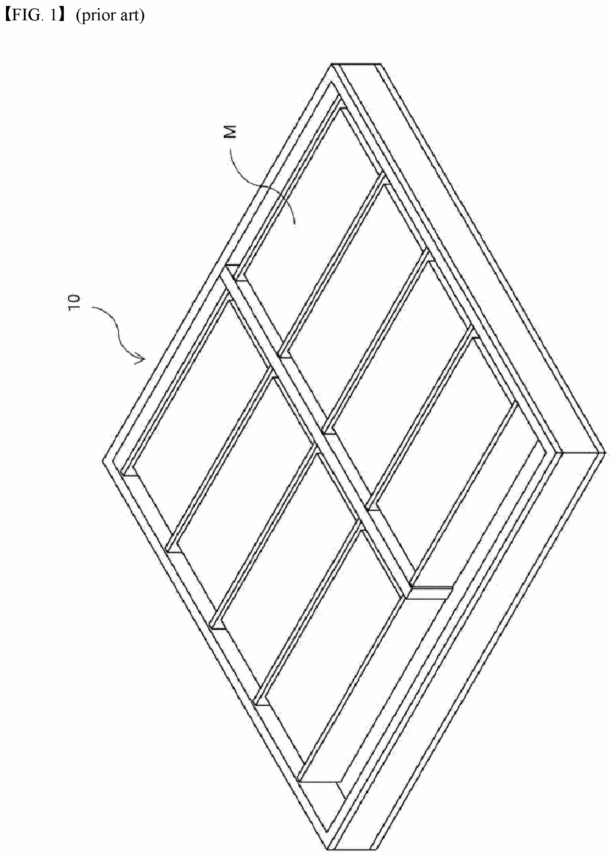

FIG. 1 is a perspective view of a conventional battery pack 10, including a pack case and a battery module M accommodated in an inner space of the pack case.

In a battery pack 10 of the structure described above, when thermal runaway occurs in any of the battery modules M accommodated therein, flames generated by the battery modules M may be discharged to the outside through the top. Most battery packs 10 may further include a top cover etc. that is coupled to the pack case to cover the top of the battery modules M, but there is a significant risk that the top cover may also be damaged by exposure to the flame.

### [Related Art Document]

(Patent Document 1) Korean Patent Publication No. 10-2022-0004854
(Patent Document 2) US Patent Publication No. 2014/113167
(Patent Document 3) Korean Patent Publication No. 10-2022-0098588
(Patent Document 4) European Patent Publication No. 4 391 184 A1 is a prior art document according to article 54(3) EPC. According to its abstract, this document states a battery pack that includes a pack tray accommodating at least one battery module; a pack cover covering a top of the pack tray, and having a vent passage of venting gas; and a top plate portion disposed between the pack tray and the pack cover and having a lower part facing the battery module and an upper part communicating with the vent passage, wherein the top plate portion is configured to selectively vent the venting gas among flame, high temperature particle and the venting gas generated from the battery module.
(Patent Document 1) US Patent Publication No. 2020/194756

### [Disclosure]

### [Technical Problem]

Accordingly, the present invention was conceived to solve the above problems, and an object is to provide a battery pack capable of preventing the flame generated with the thermal runaway from being directly exposed to the outside, even if a thermal runaway phenomenon occurs in the battery module accommodated therein.

Other objects and advantages of the present invention will be understood from the following description and will become more apparent with reference to embodiments of the present invention. Also, it will be readily apparent that the objects and advantages of the present invention may be realized by the means and combinations thereof disclosed in the patent claims.

### [Technical Solution]

According to the present invention, a battery pack includes: a battery module (M) accommodated in the battery pack; a pack case providing a space in which the battery module is seated; the top cover coupled to the pack case to cover the top of the battery module seated in the pack case; and a plurality of screen covers interposed between the pack case and the top cover and each comprising a through hole opened to expose a top of the battery module to the outside,
wherein the pack case comprises:
a base plate supporting the bottom of the battery module;
a main separation wall coupled across a center of the base plate;
a side wall coupled along an edge of the base plate; and
a sub separation wall coupled at both ends with the main separation wall and the side wall, respectively, and coupled to the base plate at predetermined intervals spaced along a length direction of the main separation wall,
wherein the pack case comprises a plurality of module areas divided and formed by the main separation wall and the sub separation wall, and each of the screen covers is coupled to the pack case to cover one of the module areas among the plurality of module areas,
wherein the sides of each screen cover comprise laterally projecting protrusion parts and groove parts formed between the protrusion parts,
and a pair of screen covers disposed adjacent to each other is coupled by engaging the protrusion parts and groove parts with each other.

Each screen cover may include a plurality of through holes, and the through holes may be formed at predetermined intervals spaced along a transverse axis and a vertical axis of the corresponding screen cover.

The through holes may be formed in at least one of a circular and a polygon shape.

The pack case may include a pair of module areas divided by the main separation wal.

Each screen cover may include a flame-resistant material.

Each screen cover may further include a rupture member coupled to an inner circumferential surface of each through hole to block said through hole.

Each rupture member may include a thermoplastic material, and the corresponding through hole may be opened as the rupture member is melted by the high temperature heat generated in the module area.

Each rupture member is coupled to a through hole to be destroyed when a certain pressure is applied, and said through hole may be opened by the destruction of said rupture member by high pressure gas generated in the module area.

Screen covers may be stacked and interposed between the top cover and the pack case.

The plurality of stacked screen covers may be disposed with each of the through holes in the same position.

The stacked screen covers may be disposed in a position where the through holes included in any one of the plurality of stacked screen covers (200) are disposed in positions that are obstructed by other screen covers (200).

Each through hole may be formed in a slit form.

### [Advantageous Effects]

According to the present invention, even if a thermal runaway occurs in the battery module accommodated inside, the stability of a battery pack can be improved by preventing the phenomenon that a flame generated simultaneously with the thermal runaway occurs to the outside.

### [Brief Description of the Drawings]

FIG. 1 is a perspective view of a conventional battery pack.
FIG. 2 is a perspective view of a battery pack according to a not claimed first embodiment.
FIG. 3 is a top view of the battery pack, without the top cover.
FIG. 4 is a cross-sectional view of a portion of the battery pack of FIG. 3 between the sub separation walls.
FIG. 5 illustrates a first modified example of the screen cover.
FIG. 6 illustrates a second modified example of the screen cover.
FIG. 7 illustrates a third modified example of the screen cover.
FIG. 8 illustrates a fourth modified example of the screen cover.
FIG. 9 is a perspective view of a battery pack according to a not claimed second embodiment.
FIG. 10 is a top view of the battery pack of FIG. 9 with the top cover removed.
FIG. 11 is a perspective view of a battery pack according to a third embodiment of the present invention.
FIG. 12 is a top view of the battery pack of FIG. 11 with the top cover removed.

### [Best Mode of the Invention]

Hereinafter, the present invention will be described in detail with reference to the drawings. Prior to this, terms and words used in the present specification and claims should not be construed as limited to general or dictionary terms and should be interpreted with the meaning and concept in accordance with the technical idea of the present invention based on the principle that the inventors have appropriately defined the concepts of terms in order to explain the invention in the best way.

Accordingly, it is to be understood that the embodiments described herein, and the configurations illustrated in the drawings are only the most preferred embodiments of the present invention and do not represent all of the technical ideas of the present invention.

In addition, detailed descriptions of well-known functions and constructions may be omitted for clarity and conciseness.

The embodiments of the present invention are provided to illustrate the present invention more completely to those of ordinary skill in the art, and the shapes and sizes of the components in the drawings may be exaggerated, omitted, or shown schematically for clarity. Therefore, the size or proportions of each component are not necessarily indicative of actual size or proportions.

The present invention relates to a battery pack, characterized in that when a flame with high temperature gases occurs in any one of a plurality of battery modules accommodated therein, a screen cover is applied which is capable of extinguishing the flame so that the flame is not directly exposed to the outside.

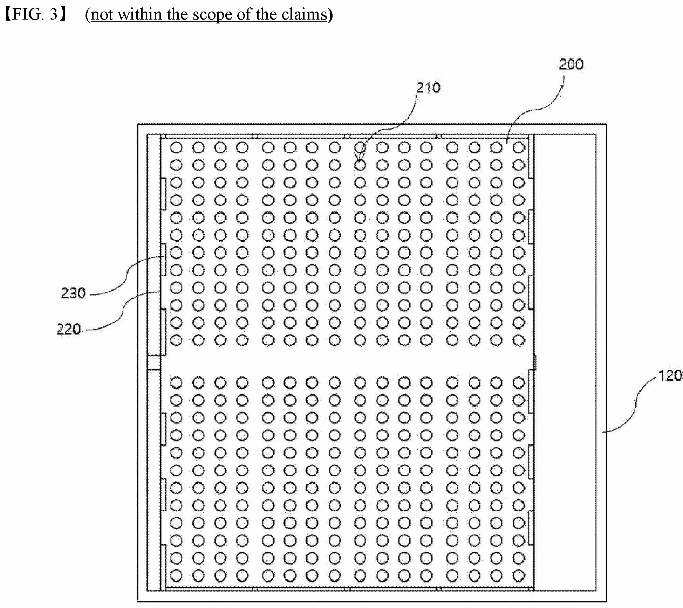

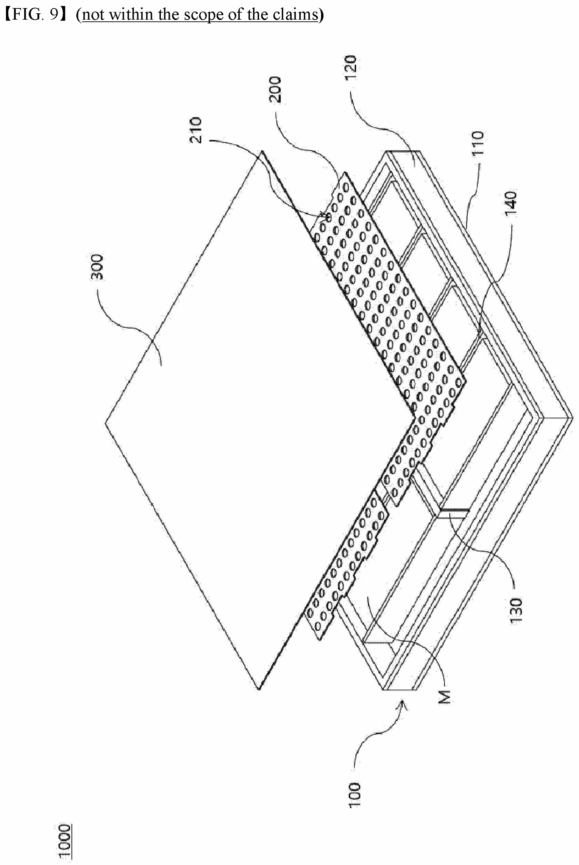

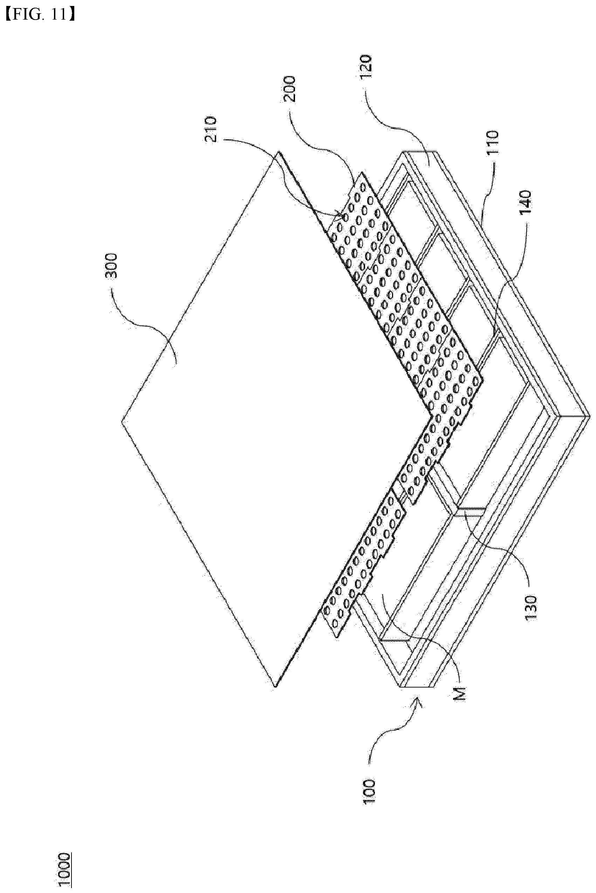

FIG. 3 to FIG. 6 relate to a battery pack according to a first embodiment not within the scope of the claims, FIG. 9 to FIG. 10 relate to a battery pack according to a second embodiment not within the scope of the claims, and FIG. 11 to FIG. 12 relate to a battery pack according to a third embodiment of the present invention.

Hereinafter, the battery pack of the present invention according to each embodiment will be described with reference to the accompanying drawings.

### (first embodiment not within the scope of the claims)

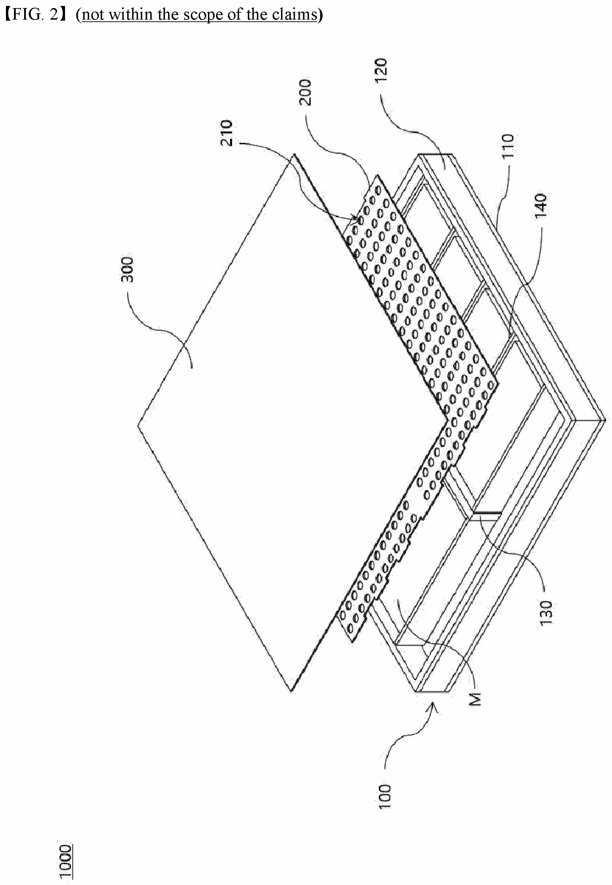

FIG. 2 is a perspective view of a battery pack 1000 according to a first embodiment of the present invention.

The battery pack 1000 of the present invention as shown in FIG. 2 includes a pack case 100, a top cover 300, and a screen cover 200.

The pack case 100 serves to provide a space in which the battery module M is seated and encloses and protects the bottom and sides of the battery module M seated therein.

The pack case 100 comprises a base plate 110 supporting the bottom of the battery module M, and side wall 120 coupled along an edge of the base plate 110 to support the sides of the battery module M.

The pack case 100 may further comprise a main separation wall 130 coupled across the center of the base plate 110.

The main separation wall 130 divides the internal space of the pack case 100 in half and separates into two large spaces.

Within the main separation wall 130, various measuring wires, busbars, and the like may be inserted.

The pack case 100 includes a pair of module areas divided by the main separation wall 130, wherein each module area may contain one or more battery modules M.

The pack case 100 may further comprise a sub separation wall 140, which is coupled at both ends to the main separation wall 130 and the side wall 120, respectively.

The sub separation wall 140 serve to re-divide the module area formed on one side of the main separation wall 130, separating each battery module M from the other.

The sub separation wall 140 are spaced apart at predetermined intervals along the length direction of the main separation wall 130 on both sides of the main separation wall 130 and are coupled to the base plate 110.

The top cover 300 is coupled to the pack case 100, and serves to cover the top of the battery module M seated in the pack case 100 to protect from external shocks etc. More specifically, the top cover 300 is coupled to the side wall 120 included in the pack case 100 to enclose and protect all of the top of the battery module M therein.

The screen cover 200 is interposed between the pack case 100 and the top cover 300 and covers the top of each battery module M at the bottom of the top cover 300.

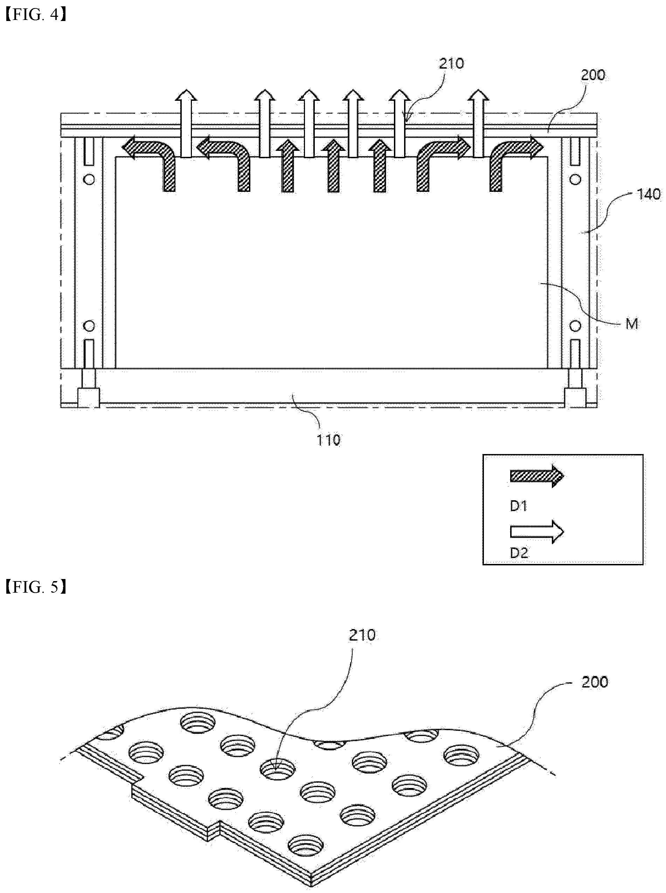

FIG. 3 is a top view of the battery pack 1000 without the upper cover 300, and FIG. 4 is a cross-sectional view of a part of the battery pack 1000 of FIG. 3 between the sub separation wall 140.

The screen cover 200, as shown in FIGS. 2 and 3 is characterized in that it includes a through hole 210 that is open to expose the top of the battery module M to the outside.

The screen cover 200 including the through hole 210 is coupled to the pack case 100 to cover the top of the plurality of battery modules M seated in the pack case 100.

The screen cover 200 of the present invention serves to prevent flames from spreading to the outside when a fire occurs in the plurality of battery modules M accommodated therein.

Referring to FIG. 4, the flame is blocked by the screen cover 200 and cannot spread to the outside, but only moves D1 along the bottom surface of the screen cover 200, and the gas moves D2 through the through hole 210 and is discharged to the outside.

The through hole 210 formed in the screen cover 200, as shown in FIG. 4 may serve as a passageway for high temperature gases generated with a fire to discharge but may prevent flames from escaping. Thus, the screen cover 200 may prevent fire from spreading to the entire battery pack 1000 by preventing flames from directly contacting the top cover 300.

The screen cover 200 may be directly exposed to the flame generated by the battery module M in thermal runaway condition, and should be able to withstand high temperatures of heat in the exposed state. Therefore, the screen cover 200 preferably comprises a material that is resistant to high temperatures of heat and flame. In other words, the screen cover 200 preferably comprises a flame-resistant material.

The screen cover 200 may be coupled to the side wall 120 of the pack case 100, same as the top cover 300, or may be coupled to the main separation wall 130 and sub separation wall 140.

The sides of the screen cover 200 may comprise protrusion part 220 projecting sideways along the perimeter and groove part 230 formed between the protrusion part 220. In this case, the top of the side wall 120 of the pack case 100 may be structured to engage the protrusion part 220 and groove part 230 of the screen cover 200, and the screen cover 200 may be secured to the pack case 100 with the protrusion part 220 and groove part 230 engaging and coupled to the side wall 120.

The size and number of the through hole 210 may be designed to vary according to the size and number of the battery module M accommodated in the battery pack 1000.

However, the through holes 210 is preferably limited to a size such that flames generated by the battery modules M are not exposed to the outside through the through hole 210.

The screen cover 200 may include a plurality of through holes 210, and the plurality of through holes 210 may be formed at predetermined intervals spaced apart.

The through holes 210, as shown in FIGS. 2 and 3. are formed along a transverse axis and a vertical axis of the screen cover 200.

When a fire occurs in the battery module M accommodated in the battery pack 1000 of the present invention, the flame caused by the fire spreads upwards where the top cover 300 is located. However, the battery pack 1000 of the present invention is capable of preventing the flame from spreading upward through a screen cover 200 interposed between the upper cover 300 and the battery module M. The screen cover 200 prevents the flame from spreading upward. Furthermore, the screen cover 200 can selectively discharge high temperature gases through the through hole 210.

The battery pack 1000 of the present invention may also include a plurality of screen covers 200. In other words, a plurality of stacked screen covers 200 may not only prevent flames from the bottom, but also delay the transfer of high temperature heat to the top cover 300.

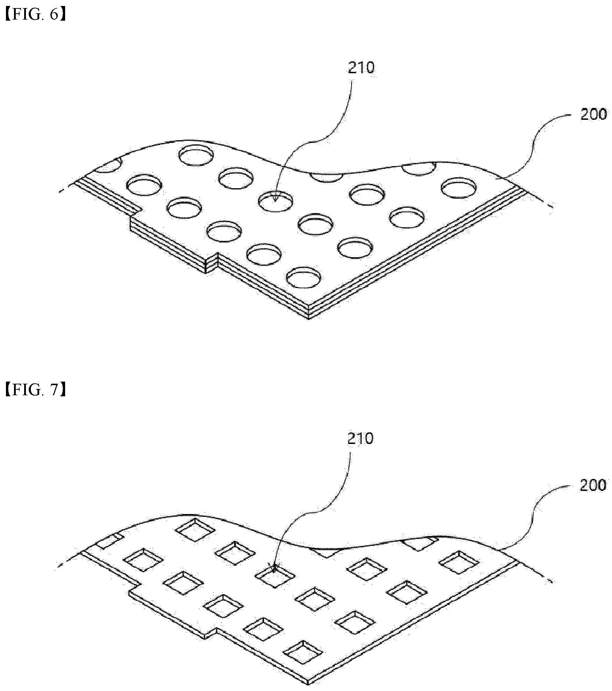

FIG. 5 illustrates a first modified example of the screen cover 200, in which a plurality of screen covers 200 are stacked, and FIG. 6 illustrates a second modified example of the screen cover 200, in which a plurality of screen covers 200 are stacked.

FIG. 5 illustrates a plurality of screen covers 200 stacked together with through holes 210 disposed in the same location, so that the through holes 210 allow for the discharge of gases but prevent the discharge of flames.

FIG. 6 shows a stacked form of a plurality of screen covers 200 in which the through holes 210 are disposed in non-uniform positions, that is, the through holes 210 included in any one of the plurality of screen covers 200 are disposed in positions that are obstructed by other screen covers 200.

The screen cover 200 stacked in the form shown in FIG. 6 has the advantage that the discharge of gas may not be smooth, but the discharge of flame can be effectively prevented.

The through hole 210 may be circular shape as shown, but is not limited to, and the through hole 210 may be formed in a circular shape as shown, or may be formed in a polygonal shape.

FIG. 7 is a third modified example of the screen cover 200, in which a rectangular through hole 210 is formed.

The through hole 210 may be formed in a point shape, such as circular or polygonal shape, or may be formed in the slit shape.

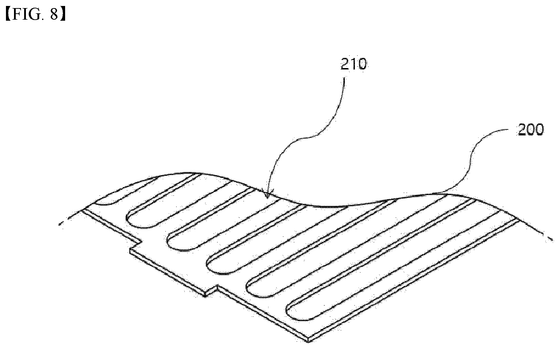

FIG. 8 shows a fourth modified example of the screen cover 200, in which a slit-shaped through hole 210 is formed. The through hole 210 in the form shown in FIG. 8 extends along a transverse or vertical axis of the screen cover 200. The slit-shaped through hole 210 as described above has a larger area opened, but it is possible to prevent flames by adjusting the width of the through hole 210.

The screen cover 200 may further comprise a rupture member (not shown) coupled to an inner circumferential surface of the through hole 210 to block the through hole 210.

These rupture members may be ruptured by high temperatures of heat or gases under high pressure generated by thermal runaway of the battery module M.

Specifically, the rupture member, which is usually coupled to the through hole 210 and serves to ensure that the battery module M accommodated therein is sealed, may be melted by the high temperature heat generated by the thermal runaway of the battery module M. In other words, the through hole 210 may be opened as the rupture member is melted by the high temperature heat generated in the module area. In this case, the rupture member may comprise a thermoplastic material that is readily melted by high temperatures of heat.

Alternatively, the rupture member may be destroyed by a high-pressure gas generated by the thermal runaway of the battery module M. That is, the through hole 210 may be opened by the destruction of the rupture member by a high-pressure gas generated in the module area.

### (second embodiment not within the scope of the claims)

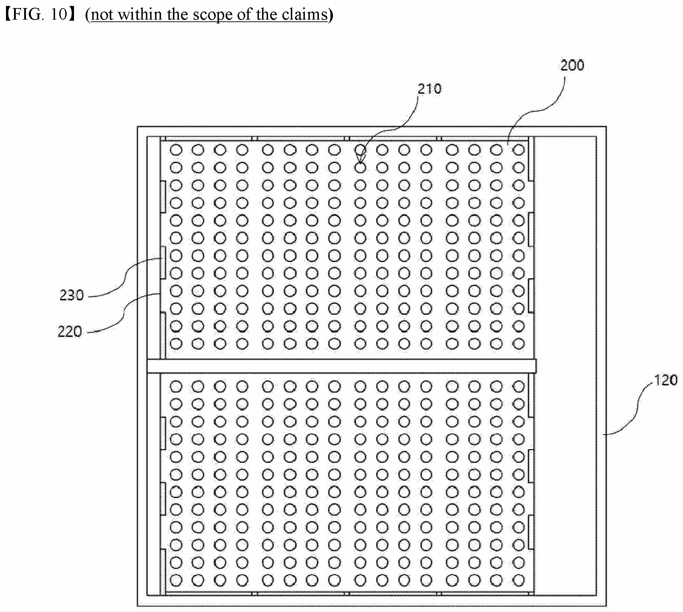

FIG. 9 is a perspective view of a battery pack 1000 according to a second embodiment of the present invention, and FIG. 10 is a plan view of the battery pack 1000 of FIG. 9 with the top cover 300 removed.

The battery pack 1000 of the present invention includes a pack case 100, a top cover 300, and a screen cover 200, as shown in FIG. 9 above.

The screen cover 200 is coupled to the pack case 100 to cover at least one of a pair of module areas divided by the main separation wall 130. In other words, the battery pack 1000 according to a second embodiment of the present invention is characterized in that the screen cover 200 can be coupled in pairs to either side of the main separation wall 130.

As described above, the screen covers 200 separated by the main separation wall 130 are not connected to each other, so heat transfer through conduction between them is not possible. Therefore, even if a thermal runaway occurs in the battery module M accommodated on one side of the main separation wall 130, and the screen cover 200 covering the top of the battery module M is heated by the high temperature, the heat is not transferred to the other screen cover 200 disposed on the other side of the main separation wall 130.

### (third embodiment)

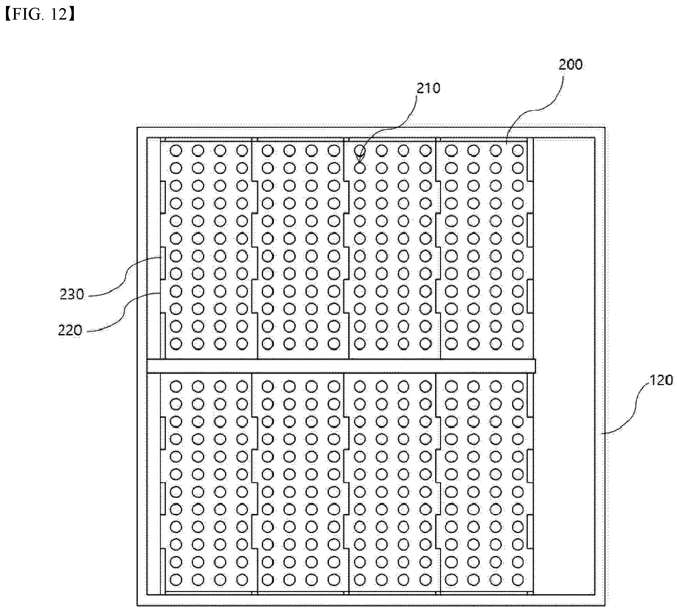

FIG. 11 is a perspective view of a battery pack 1000 according to a third embodiment of the present invention, and FIG. 12 is a plan view of the battery pack 1000 of FIG. 11 with the top cover 300 removed.

The battery pack 1000 of the present invention includes a pack case 100, a top cover 300, and a screen cover 200, as shown in FIG. 11.

The screen cover 200 is coupled to the pack case 100 to cover at least one of a plurality of module areas formed by the main separation wall 130 and sub separation wall 140. In other words, the battery pack 1000 according to a third embodiment of the present invention, wherein the screen cover 200 is coupled to cover a module area between a pair of sub separation wall 140 disposed at predetermined intervals on either side of the main separation wall 130.

Each of the module areas is covered by one screen cover 200, wherein a pair of screen covers 200 disposed adjacent to each other may be engaged by the protrusion part 220 and the groove part 230 engaging each other.

When a single screen cover 200 is coupled to a module area as described above, it is possible to selectively position the screen cover 200 in only those areas where it is needed, thereby reducing the amount of screen cover 200 used to further improve safety while simultaneously improving the energy efficiency of the battery pack 1000.

Although the invention is shown and described in connection with particular embodiments, it will be readily apparent to those of ordinary skill in the art that various modifications and variations are possible, as long as they fall within the scope of the appended claims.

### [Description of reference numerals]

10: (prior art) battery pack
1000: battery pack
100: pack case
110: base plate
120: side wall
130: main separation wall
140: sub separation wall
200: screen cover
210: through hole
220: protrusion part
230: groove part
300: top cover
M: battery module
D1: flame movement
D2: gas movement

## Claims

1. A battery pack (1000) comprising:
a battery module (M) accommodated in the battery pack (1000);
a pack case (100) providing a space in which the battery module is seated;
a top cover (300) coupled to the pack case (100) to cover the top of the battery module seated in the pack case (100); and
a plurality of screen covers (200) interposed between the pack case (100) and the top cover (300), and each comprising a through hole (210) opened to expose the top of the battery module to the outside,
wherein the pack case (100) comprises:
a base plate (110) supporting the bottom of the battery module (M);
a main separation wall (130) coupled across a center of the base plate (110);
a side wall (120) coupled along an edge of the base plate (110); and
a sub separation wall (140) coupled at both ends with the main separation wall (130) and the side wall (120), respectively, and coupled to the base plate (110) at predetermined intervals spaced along a length direction of the main separation wall (130),
wherein the pack case (100) comprises a plurality of module areas divided and formed by the main separation wall (130) and the sub separation wall (140), and each of the screen covers (200) is coupled to the pack case (100) to cover one of the module areas among the plurality of module areas,
wherein the sides of each screen cover (200) comprise laterally projecting protrusion parts (220) and groove parts (230) formed between the protrusion parts (220),
and a pair of screen covers (200) disposed adjacent to each other is coupled by engaging the protrusion parts (220) and groove parts (230) with each other.

2. The battery pack (1000) of claim 1, wherein each screen cover (200) comprises a plurality of through holes (210), and the through holes (210) are formed at predetermined intervals spaced along a transverse axis and a vertical axis of the corresponding screen cover.

3. The battery pack (1000) of claim 1, wherein the through holes (210) are formed in at least one of a circular and a polygon shape.

4. The battery pack of claim 1,
wherein the pack case (100) comprises a pair of module areas divided by the main separation wall (130).

5. The battery pack (1000) of claim 1, wherein each screen cover (200) comprises a flame-resistant material.

6. The battery pack (1000) of claim 1, wherein each screen cover (200) further comprises a rupture member coupled to an inner circumferential surface of each through hole (210) to block said through hole (210).

7. The battery pack (1000) of claim 6, wherein each rupture member comprises a thermoplastic material, and the corresponding through hole (210) is opened as the rupture member is melted by the high temperature heat generated in the module area.

8. The battery pack (1000) of claim 6, wherein each rupture member is coupled to a through hole (210) to be destroyed when a certain pressure is applied, and said through hole (210) is opened by the destruction of said rupture member by high pressure gas generated in the module area .

9. The battery pack (1000) of claim 1, wherein further screen covers (200) are stacked and interposed between the top cover (300) and the pack case (100).

10. The battery pack (1000) of claim 9, wherein the stacked screen covers (200) are disposed with each of the through holes (210) in the same position.

11. The battery pack (1000) of claim 9, wherein the stacked screen covers (200) are disposed in a position where the through holes (210) included in any one of the stacked screen covers (200) are obstructed by other screen covers (200).

12. The battery pack (1000) of claim 1, wherein each through hole (210) is formed in a slit form.

## Patentansprüche

1. Batteriepack (1000), umfassend:
ein Batteriemodul (M), das in dem Batteriepack (1000) untergebracht ist;
ein Packgehäuse (100), das einen Raum bereitstellt, in dem das Batteriemodul sitzt;
eine obere Abdeckung (300), die mit dem Packgehäuse (100) gekoppelt ist, um die Oberseite des in dem Packgehäuse (100) sitzenden Batteriemoduls abzudecken; und
eine Vielzahl von Siebabdeckungen (200), die zwischen dem Packgehäuse (100) und der oberen Abdeckung (300) angeordnet sind und jeweils ein Durchgangsloch (210) umfassen, das geöffnet ist, um die Oberseite des Batteriemoduls nach außen freizulegen,
wobei das Packgehäuse (100) umfasst:
eine Grundplatte (110), die den Boden des Batteriemoduls (M) trägt;
eine Haupttrennwand (130), die über eine Mitte der Grundplatte (110) gekoppelt ist;
eine Seitenwand (120), die entlang einer Kante der Grundplatte (110) gekoppelt ist; und
eine Nebentrennwand (140), die an beiden Enden mit der Haupttrennwand (130) bzw. der Seitenwand (120) gekoppelt ist und mit der Grundplatte (110) in vorbestimmten Abständen entlang einer Längsrichtung der Haupttrennwand (130) beabstandet gekoppelt ist,
wobei das Packgehäuse (100) eine Vielzahl von Modulbereichen umfasst, die durch die Haupttrennwand (130) und die Nebentrennwand (140) geteilt und gebildet werden, und jede der Siebabdeckungen (200) mit dem Packgehäuse (100) gekoppelt ist, um einen der Modulbereiche aus der Vielzahl der Modulbereiche abzudecken,
wobei die Seiten jeder Siebabdeckung (200) seitlich vorstehende Vorsprungsteile (220) und zwischen den Vorsprungsteilen (220) gebildete Nutteile (230) umfassen,
und ein Paar von nebeneinander angeordneten Siebabdeckungen (200) durch Ineinandergreifen der Vorsprungsteile (220) und Nutteile (230) miteinander gekoppelt ist.

2. Batteriepack (1000) nach Anspruch 1, wobei jede Siebabdeckung (200) eine Vielzahl von Durchgangslöchern (210) umfasst und die Durchgangslöcher (210) in vorbestimmten Abständen entlang einer Querachse und einer vertikalen Achse der entsprechenden Siebabdeckung ausgebildet sind.

3. Batteriepack (1000) nach Anspruch 1, wobei die Durchgangslöcher (210) in einer kreisförmigen und/oder einer polygonalen Form ausgebildet sind.

4. Batteriepack nach Anspruch 1, wobei das Packgehäuse (100) ein Paar von Modulbereichen umfasst, die durch die Haupttrennwand (130) geteilt sind.

5. Batteriepack (1000) nach Anspruch 1, wobei jede Siebabdeckung (200) ein flammhemmendes Material umfasst.

6. Batteriepack (1000) nach Anspruch 1, wobei jede Siebabdeckung (200) ferner ein Berstelement umfasst, das mit einer inneren Umfangsfläche jedes Durchgangslochs (210) gekoppelt ist, um das Durchgangsloch (210) zu blockieren.

7. Batteriepack (1000) nach Anspruch 6, wobei jedes Berstelement ein thermoplastisches Material umfasst und das entsprechende Durchgangsloch (210) geöffnet wird, wenn das Berstelement durch die im Modulbereich erzeugte Hochtemperaturwärme geschmolzen wird.

8. Batteriepack (1000) nach Anspruch 6, wobei jedes Berstelement mit einem Durchgangsloch (210) gekoppelt ist, um zerstört zu werden, wenn ein bestimmter Druck angelegt wird, und das Durchgangsloch (210) durch die Zerstörung des Berstelements durch im Modulbereich erzeugtes Hochdruckgas geöffnet wird.

9. Batteriepack (1000) nach Anspruch 1, wobei weitere Siebabdeckungen (200) gestapelt und zwischen der oberen Abdeckung (300) und dem Packgehäuse (100) angeordnet sind.

10. Batteriepack (1000) nach Anspruch 9, wobei die gestapelten Siebabdeckungen (200) so angeordnet sind, dass sich jedes der Durchgangslöcher (210) an der gleichen Position befindet.

11. Batteriepack (1000) nach Anspruch 9, wobei die gestapelten Siebabdeckungen (200) in einer Position angeordnet sind, in der die in einer der gestapelten Siebabdeckungen (200) enthaltenen Durchgangslöcher (210) durch andere Siebabdeckungen (200) blockiert sind.

12. Batteriepack (1000) nach Anspruch 1, wobei jedes Durchgangsloch (210) in einer Schlitzform ausgebildet ist.

## Revendications

1. Bloc-batterie (1000) comprenant :
un module de batterie (M) logé dans le bloc-batterie (1000) ;
un boîtier de bloc (100) fournissant un espace dans lequel le module de batterie est installé ;
un couvercle supérieur (300) couplé au boîtier de bloc (100) pour couvrir le dessus du module de batterie installé dans le boîtier de bloc (100) ; et
une pluralité de couvercles écran (200) interposés entre le boîtier de bloc (100) et le couvercle supérieur (300), et comprenant chacun un trou traversant (210) ouvert pour exposer le dessus du module de batterie à l'extérieur,
dans lequel le boîtier de bloc (100) comprend :
une plaque de base (110) supportant le fond du module de batterie (M) ;
une paroi de séparation principale (130) couplée à travers un centre de la plaque de base (110) ;
une paroi latérale (120) couplée le long d'un bord de la plaque de base (110) ; et
une paroi de séparation secondaire (140) couplée aux deux extrémités avec la paroi de séparation principale (130) et la paroi latérale (120), respectivement, et couplée à la plaque de base (110) à des intervalles prédéterminés espacés dans une direction de la longueur de la paroi de séparation principale (130),
dans lequel le boîtier de bloc (100) comprend une pluralité de zones de module divisées et formées par la paroi de séparation principale (130) et la paroi de séparation secondaire (140), et chacun des couvercles écran (200) est couplé au boîtier de bloc (100) pour couvrir l'une des zones de module parmi la pluralité de zones de module,
dans lequel les côtés de chaque couvercle écran (200) comprennent des parties saillantes (220) en saillie latérale et des parties de rainure (230) formées entre les parties saillantes (220),
et une paire de couvercles écran (200) disposés de manière adjacente l'un à l'autre est couplée en mettant en prise les parties saillantes (220) et les parties de rainure (230) les unes avec les autres.

2. Bloc-batterie (1000) selon la revendication 1, dans lequel chaque couvercle écran (200) comprend une pluralité de trous traversants (210), et les trous traversants (210) sont formés à des intervalles prédéterminés espacés le long d'un axe transversal et d'un axe vertical du couvercle écran correspondant.

3. Bloc-batterie (1000) selon la revendication 1, dans lequel les trous traversants (210) sont formés dans au moins une forme parmi une forme circulaire et une forme de polygone.

4. Bloc-batterie selon la revendication 1, dans lequel le boîtier de bloc (100) comprend une paire de zones de module divisées par la paroi de séparation principale (130).

5. Bloc-batterie (1000) selon la revendication 1, dans lequel chaque couvercle écran (200) comprend un matériau ignifuge.

6. B bloc-batterie (1000) selon la revendication 1, dans lequel chaque couvercle écran (200) comprend en outre un élément de rupture couplé à une surface circonférentielle intérieure de chaque trou traversant (210) pour bloquer ledit trou traversant (210).

7. Bloc-batterie (1000) selon la revendication 6, dans lequel chaque élément de rupture comprend un matériau thermoplastique, et le trou traversant (210) correspondant est ouvert lorsque l'élément de rupture est fondu par la chaleur à haute température générée dans la zone de module.

8. Bloc-batterie (1000) selon la revendication 6, dans lequel chaque élément de rupture est couplé à un trou traversant (210) pour être détruit lorsqu'une certaine pression est appliquée, et ledit trou traversant (210) est ouvert par la destruction dudit élément de rupture par un gaz à haute pression généré dans la zone de module.

9. Bloc-batterie (1000) selon la revendication 1, dans lequel d'autres couvercles écran (200) sont empilés et interposés entre le couvercle supérieur (300) et le boîtier de bloc (100).

10. Bloc-batterie (1000) selon la revendication 9, dans lequel les couvercles écran empilés (200) sont disposés avec chacun des trous traversants (210) dans la même position.

11. Bloc-batterie (1000) selon la revendication 9, dans lequel les couvercles écran empilés (200) sont disposés dans une position où les trous traversants (210) inclus dans l'un quelconque des couvercles écran empilés (200) sont obstrués par d'autres couvercles écran (200).

12. Bloc-batterie (1000) selon la revendication 1, dans lequel chaque trou traversant (210) est formé en forme de fente.
